# EUROPEAN PATENT APPLICATION

(11) **EP 1 424 362 A1**
(43) Date of publication of application: **02.06.2004**
(21) Application number: 02079933.4
(22) Date of filing: 27.11.2002
(51) Int. Cl.: C08L 77/12, C08F 2/44, C09D 177/12

(54) **Process for preparing a composition**

(71) Applicant: DSM IP Assets B.V., 6411 TE Heerlen (NL)
(72) Inventor: Muscat, Dirk, 6171 TN Stein (NL); Stanssens, Dirk Armand Wim, 3530 Houthalen (BE); Heise, Andreas, 52538 Gangelt (DE); Dorschu, Marko, 6191 CH Beek (NL)
(74) Representative: Mooij, Johannes Jacobus

(57) **Abstract**

The invention relates to a process for preparing a composition comprising a hyperbranched polyesteramide and solid particles dispersed therein, comprising the steps of (a) forming a mixture comprising of (i) the solid particles in a dispersed state; and (ii) an A-Bₓ monomer comprising an amide group, wherein A is a carboxyl acid functional group and B is a hydroxyl functional group or A is a hydroxyl functional group and B is a carboxyl acid functional group, and x, being an integer, is the number of functional groups B per molecule A-Bₓ; and (b) then heating the mixture to polymerize the A-Bₓ monomer and to form the hyperbranched polyesteramide. The invention also relates to a composition obtainable by said process, and the use of said composition for preparing a polymer composition, a paint composition or a thermoset composition.

## Description

The invention relates to a process for preparing a composition comprising a carrier polymer and solid particles dispersed therein, and to a composition consisting essentially of a carrier polymer and solid particles dispersed therein.

Such a process is known from an article of C.J.G. Plummer et al. in Chem. Mater. 2002, 14, 486-488. This article describes a process for preparing a composition wherein the carrier polymer is a hyperbranched polyester and the solid particles are an exfoliated layered sodium montmorillonite (NaMMT) silicate clay. The hyperbranched polyester / NaMMT composition was used to prepare NaMMT based polyurethane nano-compositions. In the known process the silicate clay was introduced into a solution of the hyperbranched polyester in deionized water, the mixture was stirred, half of the water was evaporated upon which a gel resulted; the resulting gel was transferred to a mold and dried for 2 days at 50°C.

A disadvantage of the known process is that it is not very suited for application on industrial scale. A gel, as formed during said process, is generally difficult to handle, whereas the drying process is very laborious and time consuming. Furthermore, the process involves the use of hydrophilic components, which makes the process not very suited for preparing compositions that are compatible with apolar polymers.

The object of the invention is to provide a process which does not have the aforementioned disadvantages or in a lesser degree.

This object has been achieved with a process wherein the carrier polymer is a hyperbranched polyesteramide and the process comprising the steps:
a) first forming a mixture comprising
   i. the solid particles in a dispersed state;
   ii. an A-Bₓ monomer comprising an amide group, wherein A is a carboxyl acid functional group and B is a hydroxyl functional group or A is a hydroxyl functional group and B is a carboxyl acid functional group, and x, being an integer, is the number of functional groups B per molecule A-Bₓ;
b) then heating the mixture to polymerize the A-Bₓ monomer and to form the hyperbranched polyesteramide.

The effect of the process according to the invention is that a tedious drying step to remove water is not required, making the process industrially more attractive. Water that is formed during the heating step during which the hyperbranched polyesteramide is formed can be distilled off during said heating step,. Another advantage is that the composition of the polyesteramide can easily be varied to make the composition compatible polymers ranging from apolar polymers to polar polymers. A further advantage is that the process according to the invention is suitable for preparing compositions comprising polar solid particles as well as for preparing compositions comprising apolar solid particles. The process according to the invention allows preparation of compositions comprising solid particles with a substantial degree of dispersion without the need to add external dispersing agents and/or to apply high shearing forces. The process allows the formation of compositions consisting essentially of solid substances and hyperbranched polyesteramide at relatively low melt viscosity which eases further processing, e.g. when preparing polymer compounds of the solid particles and a matrix polymer.

A process for preparing pigment dispersions, wherein a hyperbranched polyesteramide is used as a pigment dispersant, is described in a publication by F.O.H. Pirrung, E.M. Loen and A. Noordam in Macromolecular Symposiums Volume 187 (2002) 683-693. The hyperbranched polyesteramides described in this publication were prepared by reacting a condensate of succinic anhydride and diisopropanolamine having 8 hydroxyl groups throughout the branched structure with ca. 1200 g.mol⁻¹ with caprolactone, followed by esterification of 3 hydroxy-groups with unsaturated fatty acids, and then treating the resulting polymer with respectively 5, 3 and 1 equivalents of isocyanate functionalised tertiary amine. The process for preparing the pigment dispersions involved first the preparation of a 50% solution of the respective hyperbranched polyesteramides in a solvent, and then testing as a dispersant in an oil-free polyester based pigment concentrate with a standard pigment. The resulting pigment dispersions comprise relatively high amounts of polyester based resin and solvent, the amounts being 1.21 times respectively 3.17 times the total amount of dispersant and pigment.

It is noted in said publication that all three samples showed an unexpected high viscosity, i.e. higher than reference samples described therein. It is speculated in the above publication that the low molecular weight of the hyperbranched polyesteramide might not be sufficient for effective separation of the dispersed pigment particles.

The publication by Pirrung et al. does not describe a process as according to the invention, neither does it describe compositions consisting essentially of a hyperbranched polyesteramide and solid particles dispersed therein.

Another process for preparing a composition comprising a carrier polymer and solid particles dispersed therein is described in EP 605005. In the known process a reinforced polyamide composition is prepared by polymerizing a monomer to form a polyamide in the presence of a fluoromica-based mineral with swelling properties. Such compositions typically have limited compatibility, if any, with polymers other than polyamide. This publication does not read upon the problem of compatibility with other polymers or upon a process for preparing compositions with hyperbranched polymers, nor upon the use of hyperbranched polyesteramides as according to the process of the invention.

A further process for preparing a composition comprising a carrier polymer and solid particles dispersed therein is described in an article by C. Zeng et al in Macromolecules 2001, 34, 4098-4103. This article describes the preparation of compositions wherein the carrier polymer is polymethylmethacrylate (PMMA) or polystyrene (PS) and the solid particles are a clay. The compositions have been prepared by in-situ polymerization of acrylate or styrene monomers in the presence of the clay and a surfactant containing a polymerizable group. Also this publication does not read upon the problem of compatibility with other polymers or upon a process for preparing compositions with hyperbranched polyesteramides, nor upon the advantages of the process according ot the invention and the compositions resulting thereof.

With the term "solid particles", is here and hereinafter understood any solid material, having a particulate form with a small particle size, typically with an average particle size of at most 1 mm, that does not dissolve in the carrier polymer and that can be used for preparing polymer compositions comprising the solid material in particulate form. The particulates of the solid particles may have the form of individual primary particles; they may also have the form of agglomerates of primary particles. Such primary particles may have any shape or geometry, like spheres, cubes, platelets, squares, tubes and fibers, and all kinds of irregular modifications of these shapes and geometries. The primary particles as well as the agglomerates thereof may show large variations in length, width and thickness as well as in particle size and aspect ratio. The particle size (i.e. the largest dimension of the length, width and thickness of a particle) is here and hereafter understood to be the size of the particulates of the solid particles, independent of whether the particulate is an agglomerate or an individual particle, unless it is explicitly stated to relate to the primary particles. The aspect ratio is understood to be the ratio between length and thickness of the primary particles.

"Dispersion" or "dispersed" is used as a general term and understood here and hereafter to refer to a situation wherein the solid particles are present in a matrix of polymeric material, such as a carrier polymer, or precursors of thereof, or a matrix polymer, in the form of small particulates, independent of whether the particulate is an agglomerate or an individual particle. With "degree of dispersion" is understood the extent of de-agglomeration of the solid particles in smaller agglomerates and/or primary particles. A high degree of dispersion or substantial degree of dispersion thus corresponds with a situation wherein agglomerates, if present, are composed of a small number of primary particles. "Complete dispersion" and "completely dispersed" shall mean a situation wherein the solid particles are substantially present in the form primary particles, typically in at least 50 wt.% of the solid particles. "Complete dispersion" and "completely dispersed" is typically used to denote the highest level of dispersion.

For particles with a platelet form, the terms "intercalation" and "exfoliation" are used. "Intercalation" or "intercalated solid particles" shall mean a layered material having an increased spacing between adjacent platelets particles, compared to the untreated materials. In this sense intercalation" for platelet particles corresponds *grosso modo* with "dispersion" for other particulate materials. "Exfoliation" or "exfoliated solid particles" shall mean platelets dispersed mostly in an individual state throughout a polymeric material material, such as a carrier polymer or a matrix polymer. "Completely exfoliated" is typically used to denote the highest degree of separation of platelet particles. "Completely exfoliated" for platelet particles corresponds in this respect with "completely dispersed" for other particulate materials.

A "hyperbranched polyesteramide" (further herein also abbreviated as "HBPEA") is here and hereafter understood to be a polyesteramide obtainable from the polymerization of A-Bₓ monomer comprising an amide group, wherein x is an integer denoting the number of functional groups B per molecule A-Bₓ, A is a carboxyl acid functional group and B is a hydroxyl functional group or A is a hydroxyl functional group and B is a carboxyl acid functional group.

In the process according to the invention, wherein a dispersion of solid particles in a HBPEA is prepared by polymerizing A-Bₓ monomers to form the HBPEA, the HBPEA may optionally be modified with
iii) a first co-reactant of the type R-B_{y}, wherein B is a functional group of the same type as the functional group B in the A-Bₓ monomer, R is an organic substituent, and y, being the number of functional groups B per molecule R-B_{y}, is an integer with values from 2 to 4, and/or
iv) a second co-reactant of the type R¹-X, wherein X is a functional group that can chemically react with a hydroxyl functional group and / or a carboxyl acid functional group and R¹ is an organic substituent.

Modification of the HBPEA with a first co-reactant and/or a second co-reactant as described here above has the advantage that the HBPEA can easily be modified to make the composition compatible with an even wider range of polymers. A further advantage is that this modification can easily be performed in a melt of the HBPEA comprising the dispersed solid particles.

Modification may be performed (option 1) by the process according to the invention wherein first the A-Bₓ monomer in the mixture with the solid particles is polymerized, optionally together with the co-reactant of the type R-B_{y}, and then the co-reactant of the type R¹-X is added and reacted with the polymerized A-Bₓ monomers. This option has the advantage that the process can easily be optimized for obtaining a good dispersion of the solid particles in the HBPEA, whereafter the HBPEA can be modified for obtaining optimal compatibility with other polymers.

Modification of the HBPEA in a process according to option 1 can be performed in a step following immediately after polymerizing the A-Bₓ monomers. The modification may also be performed after isolation of the composition comprising the solid particles in the HBPEA based on the polymerized A-Bₓ monomers. Modification after isolation allows first preparing a relatively large amount of a basic HBPEA containing composition and then dividing said basic composition in smaller portions, whereafter each portion can be modified with a different second co-reactant.

Modification of the HBPEA may also be performed (option 2) by including the optional co-reactants R-B_{y} and/or R₁-X in the mixture of the solid particles and the A-Bₓ monomer and then polymerizing the optional co-reactants together with the A-Bₓ monomer. This option has the advantage that the polymerization is performed in a single step, resulting in a more time-efficient process.

In the process according to the invention, the mixture comprising the solid particles and the A-Bₓ monomer may be prepared by first preparing the A-Bₓ monomer or taking a readily available A-Bₓ monomer, and then forming the mixture comprising the solid particles and the A-Bₓ monomer. It is also possible to prepare the mixture of the solid particles in the A-Bₓ monomer by
c) first mixing the solid particles with precursors of the A-Bₓ monomer and
d) then heating the precursors to form the A-Bₓ monomer.

With the term "precursors" are here and hereafter understood the chemical components from which the A-Bₓ monomer can be formed. These chemical components are further herein indicated as "precursors".

This route (further herein called "in-situ formation") for the preparation of the A-Bₓ monomer is advantageously applied with solid particles that don't interfere with the preparation of the A-Bₓ monomer from said precursors.

The in-situ formation of the A-Bₓ monomer may be performed simultaneously with the polymerization, optionally in the presence of either one, or both types, of co-reactants R-B_{y} and R¹-X. To this end first a mixture comprising the precursors, and the optional co-reactants, is formed and then the precursors are converted into the A-Bₓ monomer under conditions under which also at least part of the polymerization can already take place. This embodiment has the advantage that the process for preparing the composition can be done in shorter time compared to the process wherein the in-situ formation and polymerization take place in two different steps.

The process may also be performed at such conditions that the in-situ formation and the polymerization take place in two different steps. This has the advantage that unwanted side reactions resulting in a less defined polymer structure, if occurring at all, are suppressed to a larger extent.

Such a process comprising the steps c) and d) may be carried out, for example, by reacting the precursors, such as an alkanolamine and a cyclic anhydride or diacid, at a temperature between 20°C and 120°C to form a hydroxyalkylamide, after which a hyperbranched polyesteramide is obtained by polycondensation at a temperature between 120°C and 250°C.

The cyclic anhydride or diacid may, for example, be used in molar excess over the alkanolamine to form an acid functional HBPEA. This is advantageously applied to form a carboxyl acid functional HBPEA or to modify the HBPEA with a co-reactant R¹-X wherein X is a functional group reactive with carboxyl functional groups.

The alkanolamine may also be used in molar excess over the cyclic anhydride or diacid to form a hydroxyl functional HBPEA. This is advantageously applied to form a hydroxyl functional HBPEA or to modify the HBPEA with a co-reactant R¹-X wherein X is a functional group reactive with hydroxyl functional groups.

In a preferred embodiment of the invention, the A-Bₓ monomer is prepared by
e) first contacting a co-reactant of the type R¹-X, selected from the group wherein X is a hydroxy- or amino- functional group, with a first molar excess of a cyclic carboxylic anhydride, thereby forming a mixture of an acid functional ester respectively an acid functional amide and a cyclic anhydride;
f) then contacting the mixture with an amount of alkanediolamine, wherein the amount is a second molar excess with respect of the first molar excess, thereby forming a mixture comprising a carboxylic acid functional dihydroxyalkylamide as the ABₓ monomer.

The advantage of the process according to the invention wherein the HBPEA is formed from a mixture comprising the A-Bₓ monomer prepared by the steps e) and f) as described here above is that the resulting composition comprises a HBPEA wherein no substantial amounts of diacids or diesters are present.

The dispersion of the solid particles in the A-Bₓ monomers may be prepared following different sequences. The solid particles may, for example, first be dispersed with the R¹-X co-reactant and then steps e) and f) are carried out. It is also possible to first perform step e), then adding and mixing the solid particles and then to perform step f). A further possibility is to first perform step e), then adding the alkanediolamine at such conditions that no reaction takes place, or that the alkanediolamine can react with the anhydride, but in such a way that substantially no esterification takes place, after which the solid particles are added and dispersed and finally esterification is allowed to take place.

The temperature at which the hydroxy-, or aminefunctional co-reactant is contacted with the cyclic carboxylic acid anhydride (step e) is not critical but will, in general, be between room temperature and 80°C. Preferably the temperature will be between 50°C and 70°C, more preferably about 60°C. Then sufficient time is allowed for the reaction between the reactant and the anhydride. If the co-reactant is a hydroxy-functional co-reactant the allowed time is generally longer, for example, at least 15 minutes. The addition of alkanediolamine in step f) may also be done at a temperature between room temperature and 80°C, also preferably between 50°C and 70°C, more preferably at about 60°C. If still applicable, the solid particles are added and dispersed. Then, the mixture is heated to allow further reaction. Typically the mixture is heated to a reaction temperature between 120°C and 250°C, more preferably 140°C and 200°C. In general, at elevated temperature the reaction between the acid anhydride and the alkanediolamine is very fast, and is followed by an esterification reaction, which proceeds typically in 4-20 hours.

More preferable, the first molar excess of step e) is at least 50% and the second molar excess of step f) is at most 33.3%. The advantage of this embodiment of the process, is that it results in a modified hyperbranched polyesteramide with a higher degree of polymerisation.

In another preferred embodiment of the process according to the invention, the mixture of the A-Bₓ monomer and the solid particles dispersed therein, is prepared by first dissolving a solid substance from which the solid particles can be prepared in a solvent to form a solution, mixing said solution with the A-Bₓ monomer, or optionally the precursors thereof, and then evaporating the solvent, in case of the optional precursors followed by converting the precursor into the A-Bₓ monomer. This embodiment has the advantage that the solvent can easily be removed, for example by destillation, without the risk of gel formation and that a composition can be prepared wherein the solid particles are very finely dispersed in the HBPEA.

Suitable solvents that can be used in this embodiment are, for example, low boiling organic solvents, water, or mixtures thereof. Preferably, the solvent is water. Water has the advantage that it is well miscible with a large number of suitable A-Bₓ monomers as well as precursors thereof. A further advantage is that water is a good solvent for many inorganic salts and allows the formation of compositions comprising finely dispersed salt. Such compositions are otherwise difficult to be prepared, if possible at all.

In the process according to the invention, the polymerization is typically performed in such a way that the resulting composition comprises a HBPEA having a weight average molecular weight between 600 and 50.000 g/mol. Preferably, the molecular weight is below 10.000, even more preferably below 5000. The advantage of a composition with a HBPEA with a lower molecular weight is that the composition is more compatible, and can be better mixed, with other polymers. A further advantage is that the resulting composition has a lower melt viscosity, making processing of the composition easier.

A-Bₓ monomers that can be used in the process according to the invention typically have individual values for x ranging from 1 to 4. The A-Bₓ monomers may be used in the form of mixtures of monomers with different values for x. Preferably, A-Bₓ monomers are used with an average value for x of at least 1.5, more preferably at least 1.75. A higher average value for x has the advantage that at a same degree of polymerization, expressed in weight average molecular weight of the HBPEA, the composition has a lower viscosity, which eases further processing of the resulting composition.

Typically, the average value for x is at most 3, more generally at most 2,5. A very appropriate average value for x is 2 or close to 2.

Suitable A-Bₓ monomers that can be used in the process according to the invention are A-Bₓ monomers obtainable from carboxylic acids having at least 2 carboxylic groups, or anhydrides thereof, and primary and/or secondary alkanolamines. Carboxylic acids having at least 2 carboxylic groups, and anhydrides thereof, and primary and secondary alkanolamines are also advantageously used as precursors for the A-Bₓ monomer in the process comprising the in-situ formation of the A-Bₓ monomer. The advantage is that the in-situ formation can easily be performed at moderate reaction conditions, i.e. at low reaction temperature and/or low amount of catalyst, eventually even without catalyst, and only a small amount of water is formed as a by-product, which can easily be removed from the mixture of A-Bₓ monomer and solid particles. As a catalyst any known catalyst, suitable for catalyzing amidation reactions, may be used. Preferably, no catalyst is used. Preferably, the A-Bₓ monomer is prepared from a cyclic carboxylic anhydride. This allows the in-situ formation to be performed at even lower temperature and/or without the addition of a catalyst and without formation of water as a by-product.

The A-Bₓ monomer comprising an amide group can be either a monocarboxyl functional monomer with x hydroxyl functional groups, x being at least 1 (A-Bₓ-type-I monomer) or a monohydroxyl functional monomer with x carboxyl functional groups, with x at least 2 (A-Bₓ type-II monomer).

The A-Bₓ-type-I monomer, being a monocarboxyl functional monomer with x hydroxyl functional groups, x being at least 1, may be prepared from dicarboxylic acids, or cyclic anhydrides thereof, with an alkanolamine. Preferably the alkanolamine is a dialkanolamine, optionally in combination with mono and/or trialkanolamine.

The A-Bₓ-type-II monomer, being a monohydroxyl functional monomer with x carboxyl functional groups, with x at least 2, may be prepared from carboxylic acids having at least 3 carboxylic groups, or cyclic anhydrides thereof, and a mono-alkanol amine.

Preferably, the A-Bₓ monomer is an A-Bₓ-type-I monomer. The advanatage is that discarboxylic acids, or anhydrides thereof, and alkanolamines are widely available, allowing preparation of basic HBPEAs in a wide variation in composition, functionality, branching degree and hydrophobic-hydrophilic variations.

Suitable cyclic anhydrides that can be used as a precursor for the A-Bₓ monomer comprising an amide group are for example aromatic mono-anhydrides, including hydrogenated aromatic mono-anhydrides and alkyl-substituted aromatic mono-anhydrides, and anhydrides derived from C₂-C₂₄ alkyl and (cyclo)alkyl diradicals, and alkyl and alkenyl substituted derivatives thereof.
Suitable aromatic mono-anhydrides are, for example, phthalic acid anhydride, naphthalenic dicarboxylic acid anhydride, tetrahydrophthalic acid anhydride, hexahydrophthalic acid anhydride, 4-methylphthalic acid anhydride, 4-methyltetrahydrophthalic acid anhydride and 4-methylhexahydrophthalic acid anhydride.

Suitable anhydrides derived from C₂-C₂₄ (cyclo)alkyl diradicals include norbornene-2,3-dicarboxylic acid anhydride and norbornene-5-yl-2,3-dicarboxylic acid anhydride.
Suitable anhydrides derived from C₂-C₂₄ alkyl diradicals, and alkyl and alkenyl substituted derivatives thereof include alkenyl- succinic acid anhydride [such as 2-dodecene-1-yl-succinic acid anhydride], maleic acid anhydride, alkyl succinic acid anhydride [such as (methyl)succinic acid anhydride], glutaric acid anhydride, maleic acid anhydride and the maleinised alkylester of an unsaturated fatty acid.

Preferably, the cyclic anhydride is chosen from the group consisting of phthalic acid anhydride, tetrahydro phthalic acid anhydride, hexahydro phthalic acid anhydride, glutaric acid anhydride, succinic acid anhydride, alkyl succinic acid anhydride and alkenyl succinic acid anhydride. The advantage is that such anhydrides are well available and economically more attractive.

Suitable dicarboxylic acids that can be used as a precursor for the A-Bₓ monomer comprising an amide group are, for example, the cyclic anhydrides derived from C₂-C₂₄ (cyclo)alkyl, aryl or (cyclo)alkyl-aryl diradical. These radicals may optionally be substituted. The diradicals may be substituted with for example a (C₁-C₂₆) alkyl group, which may be saturated or unsaturated; preferably C₁ is used as the substituent. The diradical may be for example a (methyl-)1,2-ethylene, (methyl-)1,2-ethylidene, 1,3-propylene, (methyl-)1,2-cyclohexyl, (methyl-)1,2-phenylene, 1,3-phenylene, 1,4-phenylene, 2,3-norbornyl, 2,3-norbornen-5-yl and/or (methyl-)1,2 cyclohex-4-enyl radical. The carboxylic acids may be saturated or unsaturated.

Suitable dicarboxylic acids include phthalic acid, tetrahydrophthalic acid, naphthalenic dicarboxylic acid, hexahydrophthalic acid, norbornene-5-yl-2,3-dicarboxylic acid, norbornene-2,3-dicarboxylic acid, naphthalenic dicarboxylic acid, succinic acid, alkenyl substituted succinic acid [such as 2-dodecene-1-yl-succinic acid], alkyl substituted succinic acid [such as (methyl)succinic acid], maleic acid, glutaric acid, 4-methylphthalic acid, 4-methylhexahydrophthalic acid, and 4-methyltetrahydrophthalic acid.

Preferably, the dicarboxylic acid is chosen from the group consisting of adipic acid, phthalic acid, tetrahydro phthalic acid, hexahydro phthalic acid, glutaric acid, succinic acid and alkyl and alkenyl substituted derivatives thereof.

Suitable carboxylic acids having at least 3 carboxylic functional groups, or cyclic anhydrides thereof, are trimelitic acid and pyromelitic acid.

Alkanolamines that can be used for the preparation of A-Bₓ monomers suitable for the process according to the invention, are, for example, hydroxy functional primary amines (or hydroxyalkylamines), hydroxy functional secondary amines (or (hydroxydialkylamines) and mixtures thereof.

Preferably, the A-Bₓ monomer is based on precursors wherein, as the alkanolamine, a dialkanolamine (or di(hydroxyalkyl)amine) is used. More preferably the dialkanolamine is an alkanolamine according to formula (I): 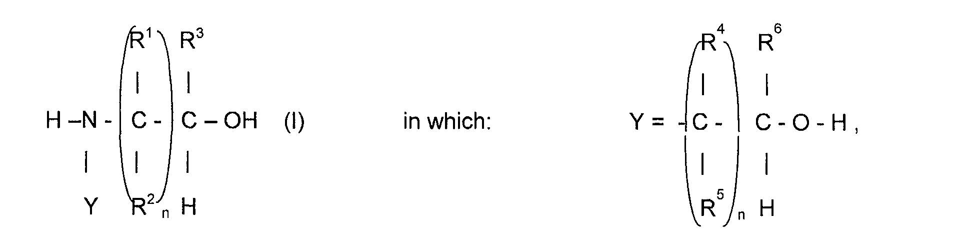 R¹, R², R³, R⁴, R⁵ and R⁶ may, independently of one another, be the same or different, H, (C₆-C₁₀) aryl or (C₁-C₈)(cyclo)alkyl radical and n=1-4.

Even more preferably the dialkanolamine is a di-β-alkanolamine, or di-β-hydroxyalkylamine, i.e. formula (I) with n=1. The advantage of the use of di-β-hydroxyalkylamine is that the polymerisation for forming the HBPEA can be performed at more moderate conditions, such as lower temperature and /or shorter polymerisation times.

Examples of suitable di-β-alkanolamines are di-isobutanolamine (bis-2-hydroxy-1-butyl)amine), di-β-cyclohexanolamine and di-isopropanolamine (bis-2-hydroxy-1-propyl)amine). Still more preferably the di-β-alkanolamine is a di(β-alkyl-substituted-β-hydroxyalkyl)amide.

Most preferable, the di(β-alkyl-substituted-β-hydroxyalkyl)amide is di-isopropanolamine or di-isobutanolamine. It has been observed that with the process wherein solid particles with polar or ionically charged surfaces are used, the use of an A-Bₓ monomer derived from di-isopropanolamine or di-isobutanolamine results in a composition with a higher degree of dispersion of the solid particles.

The dialkanolamine may optionally be combined with a hydroxy functional primary amine (or hydroxyalkylamines). Suitable hydroxyalkylamines are monohydroxyalkylamines (or monoalkanolamine), dihydroxyalkylamines (or alkanediolamines) and mixtures thereof. Preferably the monohydroxyalkylamine is an monoalkanolamine according to formula (II): 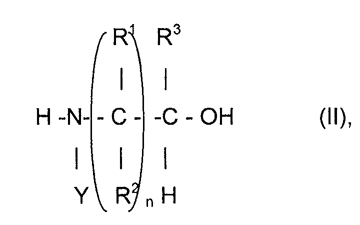 in which Y = (C₁-C₂₀) (cyclo) alkyl and R¹, R² and R³ may, independently of one another, be the same or different, H, (C₆-C₁₀) aryl or (C₁-C₈)(cyclo)alkyl radical and n=1-4.

More preferably, as the monoalkanolamine a mono-β-hydroxyalkylamide is used, i.e. monoalkanolamine according formula II with n=1. Examples of suitable mono-β-hydroxyalkylamides include ethanolamine, 1-(m)ethyl ethanolamine, n-butyl-ethanolamine, 1-(m)ethyl-isopropanolamine, isobutanolamine, β-cyclohexanolamine, n-butyl isopropanolamine and n-propanolamine. Most preferably the β-hydroxyalkylamide is a β-alkyl-substituted β-hydroxyalkylamide, such as isobutanolamine, β-cyclohexanolamine and n-butyl isopropanolamine.

Examples of suitable alkanediolamines are 3-amino-1,2-propanediol, 2-amino-1,3-propanediol. Preferably, the alkanediolamine is a (di-β-hydroxy)-alkylamine. An example is 2-amino-1,3-propanediol.

Suitable components that can be used as the first co-reactant of type R-B_{y} are, for example, aliphatic and aromatic polyfunctional alcohols. A first co-reactant R-B_{y} having alcohol functional groups can be used in the situation that the functional group B in the A-Bₓ monomer is an hydroxyl functional group. In the situation that the functional group B in the A-Bₓ monomer is a carboxy functional group, R-B_{y} can be, for example, an aliphatic or am aromatic polyfunctional carboxylic acid.

Suitable components that can be used as the second co-reactant of the type R¹-X may be chosen from the group consisting of components comprising for X a hydroxyl functional group, a carboxy functional group, an isocyanate functional group or an epoxy functional group. R¹-X may for example be a monofunctional alcohol or a monofunctional carboxylic acid depending on whether B in the A-Bₓ monomer is a carboxy functional group or a hydroxy functional group.

Suitable components that may be chosen as the second co-reactant R¹-X include monofunctional monomers, monofunctional oligomers and monofunctional polymers.

Suitable monofunctional alcohols are, for example, aliphatic alcohols R-OH, wherein R is a linear, branched or cycloaliphatic group, (preferably stearyl) and aromatic alcohols (like benzyl alcohol or derivatives thereof).

Suitable monofunctional carboxylic acids are, for example, aliphatic carboxylic acids R-COOH, wherein R is a linear, branched or cycloaliphatic group (preferably stearyl) and aromatic carboxylic acids (like benzoic acids or derivatives thereof).

Preferably, the X group in R¹-X is an isocyanate functional group or an epoxy functional group. This has the advantage that modification of the HBPEA with an R¹-X does not produce water as a by-product and that the modification step can be carried out at lower reaction temperature.

Suitable components that can be used as the second co-reactant of the type R¹-X may further be chosen from the group consisting of monofunctional polymers, such as monofunctional polyester, polyethers and polyamides. This has the advantage that the composition prepared by the process of the invention has good compatibility with matrix polymers of the same nature.

The group R in R-B_{y}, as well as the group R¹ in R¹-X, may also bear polar and/or ionic groups, as long as these groups don't interfere with the polymerization of the A-Bₓ monomer and the reaction of said A-Bₓ monomer, or reaction product thereof, with the optional co-reactants R-B_{y} and R¹-X. The process wherein the HBPEA is modified with R-B_{y} and/or R¹-X bearing polar and/or ionic groups is in particular advantageously applied in combination with solid particles of apolar character. The advantage is that the compositions prepared with said process have better compatibility with other polar polymers and these compositions may eventually even be dispersed in water.

The group R in R-B_{y}, as well as the group R¹ in R¹-X, may also bear other functional groups (such as double bonds), as long as these groups don't interfere with the polymerization of the A-Bₓ monomer and the reaction of said A-Bₓ monomer, or reaction product thereof, with the optional co-reactants R-B_{y} and R¹-X. Co-reactants of type R-B_{y} and/or R¹-X comprising an R-group respectively an R¹-group bearing double bonds may advantageously be used to prepare compositions which can be used, for example, in applications, such as coatings, involving UV-curing.

In a preferred embodiment of the process according to the invention, the A-Bₓ monomer, that is used for polymerizing into the HBPEA, is an A-Bₓ monomer obtainable from an alkanolamine comprising at least 80 wt.% diisopropanolamine or diisobutanolamine, relative to the total weight of alkanol amine, and an dicarboxylic acid, or anhydride thereof, comprising at least 80 wt.%, relative to the total weight of dicarboxylic acid, of a dicarboxylic acid, or anhydride thereof, chosen from the group consisting of adipic acid, phthalic acid, tetrahydro phthalic acid, hexahydro phthalic acid, glutaric acid, succinic acid, alkyl and alkenyl substituted succinic acid derivatives. The advantage is that these materials are industrially well available, and allow the preparation of a whole range of HBPEA from highly hydrophobic to water soluble, without further modification of the HBPEA.

In another preferred embodiment, the HBPEA that is formed in the process according to the invention is a hydrophilic polymer. The advantage of this embodiment is that polar, hard to disperse inorganic fillers and minerals can more easily be dispersed into its primary particles.

More preferable, the HBPEA is a water-soluble polymer. The advantage is that that even natural nanoclays can be nearly completely to completely exfoliated without prior surface modification. Addition of external surfactants and even addition of water or other swelling agents can be eliminated.

Another preferred mode relates to a process wherein the HBPEA that is formed is a hydrophobic polymer. The advantage of this mode of the process according to the invention is that apolar solid particles, such as organic pigments and carbon nanotubes, can be even better dispersed, which allows obtaining a composition showing either a higher degree of dispersion or at a lower viscosity, or which allows obtaining compositions with similar viscosity and higher solid particles content. A further advantage of this preferred mode is that, when as the solid particles of clays modified with organic groups are used, it allows the preparation of nearly completely to completely exfoliated clays without the addition of external surfactants or swelling agents.

The solid particles that can be used in the process according to the invention typically have a weight average particle size of at most 1 mm. Preferably, the solid particles have a weight average particle size of at most 0.1 mm, more preferably 0.01 mm and most preferably at most 1 µm. Generally, the smaller the weight average particle size of the solid particles is, the harder it is to make a polymer composition comprising a matrix polymer wherein the solid particles are well dispersed. With the composition obtainable with the process according to the invention, this problem can substantially be reduced, as the resulting composition can be used for preparing polymer compositions comprising the solid particles with a relatively high degree of dispersion.

Suitable solid particles that can be used in the process according to the invention are, for example, mineral fillers, nanofillers, salts, stabilizers, flame retardants, pigments, and carbon black.

In a preferred embodiment, the solid particles are mineral filler. The advantage is that the compositions prepared by the process according to the invention can be used as a masterbatch of said mineral filler for preparing polymer compositions comprising the mineral filler and a matrix polymer in a adequate degree of dispersion, to impart specific properties to said polymer composition, without the need of an extensive dispersing step or the use of powerful dispersing equipment. Properties imparted by said mineral fillers include any or more of the following: (para)magnetic properties, stiffness enhancer (for improved strength and/or toughness), conductivity, flame retardancy, and low thermal expansion or dimensional stability. The mineral filler may also be uses as extender.

Suitable mineral fillers are, for example, talcum, clays, kaolin, calcium carbonate, metal sulfates (such as barium sulfate and sodium sulfate), metal phosphates, metal flakes (such as aluminum), magnetic and paramagnetic particles (such as iron oxide, cobalt oxide, gandolinium oxide), and other metal oxides (such as zirconium oxide, titanium dioxide, zinc oxide, silicium oxide (for example fused silica), and iron oxide).

More preferably, the solid particles are fused silica. The advantage is that compositions prepared by said process can comprise fused silica having a very high degree of dispersion.

In another preferred embodiment, the solid particles are a nanofiller. A nanofiller is a solid material made of particles characterized by a high aspect ratio, and includes layered inorganic materials, (like natural and synthetic nanoclays, and nanoclays modified with organic groups) and fibrous material (such as metal whiskers, carbon whiskers and nanotubes). The layered inorganic materials typically consist of plates with an average aspect ratio of between 5 and 10,000. The plates typically have an average thickness of about 2.5 nm or less, and a maximum thickness of 10 nm, preferably between about 0.4 nm and about 2.5 nm, more preferably between about 0.4 nm and about 2 nm. The average length of the plates is preferably from about 2 nm to 1,000 nm.

Examples of suitable layered inorganic materials are phyllosilicates, for example smectic clay minerals, vermiculite clay minerals and micas, and synthetic micas. Examples of suitable smectic clay minerals are montmorillonite, wollastonite, nontronite, beidellite, volkonskoite, hectorite, stevensite, pyroysite, saponite, sauconite, magadiite, bentonite and kenyaite. Preferably montmorillonite is chosen as the layered inorganic material.

These nanofillers are often used as reinforcing agent in polymer compositions comprising a matrix polymer. The effectiveness of the nanofillers as a reinforcing agent generally depends on the aspect ratio of the primary particles and the degree of dispersion of the primary particles. Often, the nanofiller has a very low compatibility with the matrix polymer, and it is very difficult to obtain a good dispersion of the nanofiller in the matrix polymer. The advantage of the process according to the invention, wherein the solid particles are a nanofiller, is that it allows obtaining a composition wherein said nanofiller is well dispersed. Furthermore, the composition comprising the HBPEA and the dispersed nanofiller can be used for preparing a polymer composition comprising a matrix polymer and the nanofiller dispersed therein, with a degree of dispersion intractable by a process wherein the nanofiller is dispersed directly into the matrix polymer.

Moreover, polymer compositions comprising a matrix polymer and a nanofiller, prepared by using a composition comprising a nanofiller obtained with the process according to the invention, show enhanced dyeability.

The degree of dispersion of the nanofiller may range from an intercalated particulate solid material to a completely exfoliated particulate solid material.

Most preferably, the nanofiller is nearly completely to completely exfoliated. A composition wherein the nanofiller is nearly completely to completely exfoliated has the advantage that it can be used to prepare polymer compositions, which have improved transparency and / or improved barrier properties.

In another preferred mode the solid particles are a salt. In the context of the application, a salt is understood to be an organic or inorganic material consisting of anionic ions and cationic ions. The advantage is that the hyperbranched polyesteramide can accommodate a large concentration of salt, and the composition comprising the salt can be used for enhancing conductivity and antistatic properties of apolar polymers and the composition can be used in coatings for anti-fog applications. Suitable salts that can be used in the process according to the invention are inorganic salts (such as lithium chloride), and organic salts (such as quaternary ammonium salts).

In a further preferred mode of the process the solid particles are a pigment. In the context of the application, with pigments are meant colorants that don't dissolve in the carrier polymer. The resulting composition can be used for preparing pigmented polymer compositions with the advantage that higher color strength is obtained and less pigment is needed compared to direct pigmentation of the matrix polymer.

In another preferred mode the solid particles are carbon black. The process according to the invention wherein the solid particles are carbon black allows preparation of a composition that can be used as an additive to enhance conductivity and antistatic properties of polymer compositions comprising other matrix polymers. The advantage is that less carbon black is needed compared to compositions wherein the carbon black is mixed directly into the matrix polymer.

The mixture of solid particles and A-Bₓ monomer formed in the process according to the invention may, optionally, also comprise other components. Suitable components are, for example, catalysts for the polymerization reaction and components that don't interfere with the polymerization. Examples of suitable components, that may be present in said mixture, include additives, which are generally used in the preparation and/or processing and/or use of polymer compositions, such as stabilizers (like UV-stabilizers and anti-oxidants) and processing aids (like release agents). The mixture may also comprise additives (such as dispersing aids), which might help in dispersing the solid particles. This might be advantageous in preparing a composition with an even higher degree of dispersion of the solid particles.

The invention also relates to a composition consisting essentially of a carrier polymer and solid particles dispersed therein, and in particular to a composition that can be used as a masterbatch of the solid particles for preparing a polymer composition comprising a matrix polymer and the solid particles.

Such a composition is known from the article by C.J.G. Plummer et al., Chem. Mater. 2002, 14, 486-488, described above.

A disadvantage of the known composition is that the process for preparing the composition is laborious and time-consuming, which is not suitable for large-scale production. A further disadvantage is that the composition only comprises polar and/or hydrophilic components and is compatible with matrix polymers with limited variation in hydrophilic nature, only.

The object of the invention is to provide a composition, consisting essentially of a carrier polymer and solid particles dispersed therein, the carrier polymer being compatible with a wide range of polymers varying in hydrophilic nature, or being easily modifiable for that purpose, and which composition can be prepared by an industrially more attractive process.

This object has been achieved with a composition obtainable by the process according to the invention.

The effect of the composition according to the invention, consisting essentially of a HBPEA and solid particles dispersed therein, is that the composition can be made with simple processes. Another effect is that the composition can easily be made compatible with a large range of polymers varying in polarity. Compatibility with apolar polymers such as polypropylene, as well as with polar polymers such as polyamide, if not already included, can be achieved by modification of the HBPEA by reaction with co-reactants bearing suitable functional groups, which reaction can simply be performed in the melt of the composition. A further advantage is that the composition can accommodate both polar solid particles, as well as solid particles with apolar surface or with an apolarly modified surface. The composition according to the invention allows a high solid particles content and/or has a low melt viscosity, allowing easy further processing, e.g. when preparing a polymer composition with a matrix polymer. Moreover, the dispersion level is well maintained when preparing a polymer composition from the composition and a matrix polymer.

The Japanese Patent Application JP 63005907 describes a composition being a high-concentration colorant masterbatch wherein the solid particles are a colorant and the carrier polymer is a propylene resin or a thermoplastic resin, which is of the same kind as the propylene resin. The colorant masterbatch is combined with a talc-containing propylene composition for preparing a colored talc-reinforced propylene composition. JP 63005907 does not relate to a composition essentially consisting of a HBPEA and solid particles dispersed therein, and neither to the problem of compositions that are compatible with a large range of polymers or can easily be modified for said purpose.

The publication by Pirrung et al., cited above, describes a HBPEA containing pigment dispersion, which comprises a substantial amount of solvent and polyester based resin. The publication of Pirrung et al. does not describe compositions consisting essentially of a HBPEA and solid particles dispersed therein and neither does it relate to the effects of the compositions as according to the invention.

EP-A-0971004 describes a radiation curable powder paint binder composition comprising a hyperbranched polyesteramide. The powder paint optionally comprises a pigment. The hyperbranched polyesteramide in the powder paint binder composition is an unsaturated hyperbranched polyesteramide. This patent application does not describe compositions consisting essentially of a HBPEA and solid particles dispersed therein and neither does it relate to the effects of the compositions as according to the invention.

WO-0049082 describes a coating composition containing high aspect ratio clays. The coating is prepared from a composition comprising an exfoliating polymer typically containing functional groups, which include OH, COOH, NCO, carboxylate, primary and/or secondary amine, amide, carbamate and epoxy functional groups as the carrier polymer and an exfoliated layered silicate material as the dispersed solid particles. The carrier polymer in WO-0049082 can be a polymer prepared from polymerizable unsaturated monomers with functional groups, such as a polyester polymer, polyurethane polymer, polyether polymer, or polysilixane polymers. WO-0049082 does not describe compositions consisting essentially of a hyperbranched polyesteramide and solid particles dispersed therein and does not relate to the use of such compositions as a masterbatch of solid particles for combination with a wide range of polymers.

The composition according to the invention, which composition is obtainable with the process according to the invention, consists essentially consisting of a HBPEA and solid particles dispersed therein. For the definition of HBPEA and solid particles is referred to page 4 of this application. With a composition which consists essentially of a HBPEA and solid particles dispersed therein is understood, here and hereafter, a composition that optionally comprises only a small amount of other components. Typically, such a composition comprises at least 80 wt.% (relative to the total weight of the composition), of total amount of HBPEA and solid particles and at most 20 wt. % of at least one other component.

Preferably the content of the at least one other component is as low as possible, such as below 10 wt.%, more preferably below 5%, even more preferably below 2 wt.%, and most preferably 0 wt.% (the weight % relative to the total weight of the composition). The advantage of a lower amount of additive is that when the composition according to the invention is used to prepare a polymer composition comprising the solid particles and a matrix polymer, the effect of the at least one additive on the properties of the polymer composition is limited, or ultimately, zero.

Suitable other component that may be comprised by the composition according to the invention are, for example, dispersing aids, stabilizers and processing aids.

In a preferred embodiment of the invention the composition consists of
i) 30-99 wt.% of a HBPEA
ii) 1-70 wt.% of solid particles and
iii) below 10 wt.% of at least one additive,
wherein the wt.% is relative to the total weight of the composition and the sum of i), ii) and iii) is 100%.

Preferably the solid particles content is at least 20 wt. %, more preferably at least 30 wt. %, most preferably at least 40 wt. %. The advantages of a higher solid particles content is that for the preparation of a polymer composition comprising a matrix polymer and the solid particles, less of the composition according to the invention has to be added to reach the same solid particles content in the polymer composition. A further advantage is that the polymer composition comprises less HBPEA, thereby affecting the properties of the polymer composition in lesser extent, if any at all.

A low solid particles content of for example at most 20 wt % in the composition according to the invention has the advantage, that a higher degree of dispersion is possible with less tendency of re-aggregation or re-agglomeration, if occurring et al, of dispersed particles when preparing the polymer composition with the matrix polymer. More preferably, the solid particles content is at most 10 wt. %, most preferably at most 5 wt. %. This is in particular advantageous with solid particles that have a strong tendency to agglomerate, such as very fine carbon black and highly charged clays.

Suitable HBPEAs that can be used in the composition according to the invention are the same as described above.

The composition according to the invention may comprise solid particles typically having a degree of dispersion characterized by a weight average particle size of at most 1 mm. Preferably, the solid particles has a weight average particle size of at most 0.1 mm, more preferably 0.01 mm and most preferably at most 1 µm. Generally, the lower the weight average particle size of the solid particles is, the harder it is to make a polymer composition comprising a matrix polymer and the solid particles dispersed therein with a degree of dispersion corresponding with said low weight average particle size. By using the composition according to the invention as a masterbatch of the solid particles for preparing said polymer composition, the degree of dispersion of the solid particles is rather well maintained, and the above-mentioned problem is substantially reduced.

In a further preferred mode, the composition comprises solid particles composed of primary particles dispersed in the carrier polymer and having a weight average particle size of at most 4µm, more preferably at most 2µm, even more preferably at most 1µm, even more preferably at most 0.5µm and most preferably at most 0.1 µm. The smaller the particle size of the primary particles of the solid particles, the harder the solid particles can be dispersed into primary particles in a matrix polymer. An advantage with the composition according to the invention wherein the solid particles have a small average particle size, is that once the primary particles have been separated, the separation is better preserved. Preservation is also improved when the solid particles composition is mixed with a matrix polymer for preparing a polymer composition comprising the solid particles.

A similar effect is observed in another preferred embodiment of the invention, i.e. with the composition wherein the solid particles is composed of primary particles with a high aspect ratio. A high aspect ratio is meant in this application a length over thickness ratio of at least 5. More preferable the aspect ratio is at least 10, even more preferable at least 50, and most preferable at least 100. Generally, with increasing aspect ratio, more effort and energy input is required to separate the primary particles and re-agglomeration takes place more easily. The advantage of the composition according to the invention wherein the solid particles is solid particles with primary particles having a high aspect ratio, is that once the primary particles have been separated, the separation is better preserved. Preservation is also improved when the solid particles composition is mixed with a matrix polymer for preparing a polymer composition comprising solid particles with primary particles with a high aspect ratio.

Suitable solid particles that can be used in the composition according to the invention are, for example, mineral fillers, nanofillers, salts, stabilizers, flame retardants, pigments, and carbon black. Examples of suitable mineral fillers, nanofillers, and salts are the same as described above.

Preferably the solid particles are a mineral filler, a nanofiller, a pigment, carbon black or a salt. The advantages of compositions comprising such solid particles are described above.

More preferably, the solid particles are a nanofiller. The advantage is that the composition comprising the hyperbranched polyesteramide and a nanofiller dispersed therein, can be used for preparing reinforced polymer compositions comprising a matrix polymer with the nanofiller dispersed therein with a substantial degree of dispersion of the nanofiller, even for compositions with matrix polymers, such as polypropylene (PP), which are otherwise inaccessible for a nanofiller and which polymers otherwise are very hard to-nearly-not to be reinforced with such solid particles.

Most preferably, the composition comprises an exfoliated nanoclay. The advantage of such a composition is that it can be used to prepared nanoclay comprising compositions with enhanced transparency and/or improved barrier properties, and to enhance the dyeability of polyolefins such as polypropylene.

The invention also relates to the use of the composition according to the invention comprising the HBPEA and solid particles dispersed therein as a masterbatch for preparing a polymer composition comprising a matrix polymer and the solid particles dispersed therein.

Such a polymer composition may be prepared, for example, by melt-mixing the matrix polymer with a composition according to the invention comprising a HBPEA and solid particles.

The invention also relates to a polymer composition, comprising a matrix polymer and a composition comprising a hyperbranched polyesteramide and solid particles dispersed therein obtainable by the process according to the invention. The polymer composition according to the invention preferably comprises solid particles chosen from the group consisting of clays, nano-fillers, salts, carbon black and magnetic particles.

Also preferably, the matrix polymer is a polyolefin, more preferably polypropylene. Even more preferably, the polymer composition comprises polypropylene as the matrix polymer, a hyperbranched polyesteramide and a nanoclay dispersed therein. Polypropylene is generally very hard to dye. The advantage of polypropylene comprising a HBPEA and a nanoclay dispersed therein, is that it has better dyeability properties compared to PP comprising only a HBPEA.

The invention also relates to the use of the polymer composition according to the invention as a moulding compound for preparing molded articles

The invention furthermore relates to molded articles, in particular films and fibers, obtainable with said polymer compositions. Preferably, the molded articles are obtained from polymer compositions comprising a composition of hyperbranched polyesteramide and solid particles dispersed therein according to the invention wherein the solid particles are chosen from the group consisting of clays, nano-fillers, salts, carbon black and magnetic particles

Apart from the use as a masterbatch for preparing a polymer composition, the composition according to the invention, comprising a HBPEA and solid particles, can also advantageously be used for preparing paint compositions, as well as thermoset compositions, comprising a dispersion of the solid particles. Most preferably, the composition comprises an exfoliated nanoclay and is used for preparing a paint composition with an exfoliated nanoclay. The advantage is that the paint composition can be prepared without the need of high shearing forces for dispersing the nano-clay and that the paint composition can be used for preparing a coating with good transparency and good barrier properties.

The invention also relates to paint compositions and thermoset compositions comprising a hyperbranched polyesteramide and solid particles dispersed in the composition chosen form the group consisting of nano-fillers, salts, magnetic particles, fused silica and carbon black, and to coatings and molded articles, obtainable from respectively said paint compositions and said thermoset compositions.

The invention is further elucidated with the following non-limiting

### Examples.

### Materials

- Cloisite Na: Unmodified natural montmorillonite clay (ex Southern Clay Products, France)
- Cloisite 20A: Natural montmorillonite clay modified with a quaternary ammonium salt (ex Southern Clay Products, France)

**DiPA =** di-isopropanolamine;
**SAnh** = succinic anhydride;
**HHAnh** = hexahydrophthalic anhydride;
**PAnh** = phthalic anhydride;
**LA** = lauric acid;
**BA** = Benzoic acid;
**SA** = stearic acid.

### Example I

### Preparation of a composition comprising a water soluble HBPEA based on succinic anhydride and di-isopropanolamine and unmodified clay

331 g of succinic anhydride and 528 g of diisopropanolamine and 40 g of Cloisite Na were introduced into a double-walled glass reactor, which could be heated by means of thermal oil, fitted with a mechanical stirrer, a distillation head and nitrogen and vacuum connections. The reaction mixture was gradually heated, with stirring, to approx. 100°C and then more slowly to 160°C. Vacuum was applied when the reaction mixture was at 160°C. The pressure in the reactor was adjusted to the release of reaction water, so that this could be removed from the reactor by distillation. After a total reaction time of 12 hours the viscous polymer contained less than 0.1 meq/g carboxylic acid (titrimetrically determined) and no more water could be removed by distillation. After cooling the polymer was obtained as a very pale yellow transparent glassy material.

### Example II

### Preparation of a composition comprising a hydrophobic HBPEA based on hexahydrophthalic anhydride, diisopropanolamine and benzoic acid and modified clay

340 g of hexahydrophthalic anhydride and 352 g of diisopropanolamine were introduced into a double-walled glass reactor, which could be heated by means of thermal oil, fitted with a mechanical stirrer, a distillation head and nitrogen and vacuum connections. The reaction mixture was gradually heated, with stirring, to approx. 120°C and then 408 g Benzoic acid and 55 g of Cloisite 20A were introduced into the reactor. The reaction mixture was more slowly heated, with stirring, to approx. 160°C. Vacuum was applied when the reaction mixture was at 160°C. The pressure in the reactor was adjusted to the release of reaction water, so that this could be removed from the reactor by means of distillation. After a total reaction time of 14 hours the viscous polymer contained less than 0.2 meq/g of carboxylic acid (titrimetrically determined) and no more water could be removed by distillation. After cooling the polymer was obtained as an almost colourless transparent glassy material.

### Example III

### Preparation of a composition comprising a hydrophobic HBPEA based on comprising phthalic anhydride and diisopropanolamine and modified clay

512 g of phthalic anhydride and 552 g of diisopropanolamine and 50 g of Cloisite 20A were introduced into a double-walled glass reactor, which could be heated by means of thermal oil, fitted with a mechanical stirrer, a distillation head and nitrogen and vacuum connections. The reaction mixture was gradually heated, with stirring, to approx. 120°C and then more slowly to 160°C. Vacuum was applied when the reaction mixture was at 160°C. The pressure in the reactor was adjusted to the release of reaction water, so that this could be removed from the reactor by distillation. After a total reaction time of 16 hours the viscous polymer contained less than 0.1 meq/g carboxylic acid (titrimetrically determined) and no more water could be removed through distillation. After cooling the polymer was obtained as a very pale yellow transparent glassy material.

### Example IV

### Preparation of a composition comprising a hydrophobic HBPEA based on phthalic anhydride and diisopropanolamine and modified clay

488 g of phthalic anhydride and 570 g of diisopropanolamine and 50 g of Cloisite 20A were introduced into a double-walled glass reactor, which could be heated by means of thermal oil, fitted with a mechanical stirrer, a distillation head and nitrogen and vacuum connections. The reaction mixture was gradually heated, with stirring, to approx. 120°C and then more slowly to 160°C. Vacuum was applied when the reaction mixture was at 160°C. The pressure in the reactor was adjusted to the release of reaction water, so that this could be removed from the reactor by distillation. After a total reaction time of 15 hours the viscous polymer contained less than 0.1 meq/g carboxylic acid (titrimetrically determined) and no more water could be removed by distillation.

### Example V

### Preparation of a composition comprising a hydrophobic HBPEA based on phthalic anhydride, diisopropanolamine and stearic acid and modified clay

294 g of phthalic anhydride and 318 g of diisopropanolamine were introduced into a double-walled glass reactor, which could be heated by means of thermal oil, fitted with a mechanical stirrer, a distillation head and nitrogen and vacuum connections. The reaction mixture was gradually heated, with stirring, to approx. 120°C and then 452 g Stearic acid and 50 g of Cloisite 20A were introduced into the reactor. The reaction mixture was more slowly heated, with stirring, to approx. 160°C. Vacuum was applied when the reaction mixture was at 160°C. The pressure in the reactor was adjusted to the release of reaction water, so that this could be removed from the reactor by distillation. After a total reaction time of 12 hours the viscous polymer contained less than 0.1 meq/g carboxylic acid (titrimetrically determined) and no more water could be removed by distillation. After cooling the polymer was obtained as an almost colourless transparent glassy material.

### Comparative Experiment A

### Preparation of a composition by mixing a HBPEA based on phthalic anhydride, diisopropanolamine and stearic acid with a modified clay.

A hyperbranched polyester of the type as described in Example V was prepared as follows: 294 g of phthalic anhydride and 318 g of diisopropanolamine were introduced into a double-walled glass reactor, which could be heated by means of thermal oil, fitted with a mechanical stirrer, a distillation head and nitrogen and vacuum connections. The reaction mixture was gradually heated, with stirring, to approx. 120°C and then 452 g Stearic acid was introduced into the reactor. The reaction mixture was heated more slowly, with stirring, to approx. 160°C. Vacuum was applied when the reaction mixture was at 160°C. The pressure in the reactor was adjusted to the release of reaction water, so that this could be removed from the reactor by distillation. After a total reaction time of 12 hours the viscous polymer contained less than 0.1 meq/g carboxylic acid (titrimetrically determined) and no more water could be removed by distillation. Then clay 50 g of Cloisite 20A was added to the melt and mixed under gently stirring. After cooling the polymer was obtained as a cloudy glassy material.

### SAXS measurements

SAXS measurements were performed at the SAXS station of the Dutch-Belgium beamline (DUBBLE BM26B) of the European Synchrotron radiation facility (ESRF) at Grenoble, using an X-ray wavelength of 0.082nm and a sample-to-detector distance of about 4m. Two-dimensional scattering data were recorded with a Gabriel-type multiwire detector having 512*512 pixels, each with a size of 300*300µm². The detector was placed in an off-center position in order to cover a broad range of scattering vectors from 0.002 < s < 0.04, where s = (2/λ)*sinθ (with λ, the wavelength and 2θ, the scattering angle). Individual patterns were recorded within 300s. These patterns were normalized with respect to the primary beam intensity and corrected for sample absorption with the aid of ionization chambers placed before and after the sample position. The linear scattering profiles displayed below were obtained after performing sector integration over the two-dimensional patterns, followed by a subtraction of the transmission-weighted background scattering. All operations involving processing of the two-dimensional data were performed using BSL software.

### Results of the SAXS measurements and optical microscopy.

Samples of Examples I-V and Comparative Experiment A were investigated with SAXS measurements as described above and with optical microscopy. The resulting scattering data showed almost no scattering for Examples I-V, while no image was obtained with optical microscopy, thus indicating nearly complete exfoliation of the clay in all five cases.
Comparative Experiment A showed intensive scattering, whereas optical microscopy revealed clearly visible particles, indicating that the lamellar structure of the clay was still retained.

## Claims

1. Process for preparing a composition comprising a carrier polymer and solid particles dispersed therein **characterized in that** the carrier polymer is a hyperbranched polyesteramide and the process comprises the steps:
a. forming a mixture comprising
i. the solid particles in a dispersed state;
ii. an A-Bₓ monomer comprising an amide group, wherein A is a carboxyl acid functional group and B is a hydroxyl functional group or A is a hydroxyl functional group and B is a carboxyl acid functional group, and x, being an integer, is the number of functional groups B per molecule A-Bₓ;
b. then heating the mixture to polymerize the A-Bₓ monomer and to form the hyperbranched polyesteramide.

2. Process according to claim 1, wherein the hyperbranched polyesteramide is modified with
iii. a first co-reactant of the type R-B_{y}, wherein B is a functional group of the same type as the functional group B in the A-Bₓ, monomer, R is an organic substituent, and y, being the number of functional groups B per molecule R-B_{y}, is an integer with values from 2 to 4, and/or
iv. a second co-reactant of the type R¹-X, wherein X is a functional group that can chemically react with a hydroxyl functional group and / or a carboxyl acid functional group and R¹ is an organic substituent.

3. Process according to claim 1 or 2, wherein the mixture of the solid particles in the A-Bₓ monomer is formed by
a. first mixing the solid particles with precursors of the A-Bₓ monomer and
b. then heating the precursors to form the A-Bₓ monomer.

4. Process according to any of claims 1-3, wherein the mixture of the A-Bₓ monomer and the solid particles dispersed therein, is prepared by first dissolving a substance from which the solid particles can be prepared in a solvent to form a solution, mixing said solution with the A-Bₓ monomer, or optionally precursors thereof, and then evaporating the solvent, and, in case of the optional precursors, followed by heating to convert the optional precursor into the A-Bₓ monomer.

5. Process according to any of claims 1-4, wherein the hyperbranched polyesteramide has a weight average molecular weight between 600 and 10.000 g/mol.

6. Process according to any of claims 1-5, wherein x has an average value of at least 1.5

7. Process according to any of claims 1-6, wherein the A-Bₓ monomer is be prepared from carboxylic acids having at least 2 carboxylic groups, or anhydrides thereof, and primary and/or secondary alkanol amines.

8. Process according to claim 9, wherein the A-Bₓ monomer is based on a di-β-alkanolamine.

9. Process according to any of claims 1-8, wherein the hyperbranched polyesteramide is water-soluble.

10. Process according to any of claims 1-9, wherein the solid particles are chosen from the group consisting of mineral fillers, nanofillers, pigments, carbon black, and salts.

11. Composition consisting essentially of a carrier polymer and solid particles dispersed therein, **characterised in that** the composition is obtainable by the process according to any of claims 1-10.

12. Composition according to claim 11, wherein the composition comprises up to 20 wt.%, relative to the weight of the composition, of at least one additive.

13. Composition according to any of claims 11-12, wherein the solid particles have a particle size of at most 0.1 mm.

14. Composition according to any of claims 11-13, wherein the solid particles have an aspect ratio of at least 5.

15. Composition according to any of claims 11-14, wherein the solid particles are exfoliated clay.

16. Use of the composition according to any of claims 11-15 as a masterbatch for preparing a polymer composition, a paint composition or a thermoset composition.
